# EUROPEAN PATENT APPLICATION

(11) **EP 4 530 006 A1**
(43) Date of publication of application: **02.04.2025**
(21) Application number: 24203092.2
(22) Date of filing: 27.09.2024
(51) Int. Cl.: B23K 1/00, B23K 1/012, B23K 3/047

(54) **SOLDERING WIRES OF ELECTRODES TO PADS IN A MULTIELECTRODE CATHETER**

(30) Priority: 29.09.2023 US 202363541307 P; 19.06.2024 US 202418747543
(71) Applicant: Biosense Webster (Israel) Ltd., 2066717 Yokneam (IL)
(72) Inventor: GOVARI, Assaf, 2066717 Yokneam (IL); ALTMANN, Andres Claudio, 2066717 Yokneam (IL); SITNITSKY, Ilya, 2066717 Yokneam (IL); SHECHTMAN, Alexander, 2066717 Yokneam (IL); FUCHS, Amit, 2066717 Yokneam (IL)
(74) Representative: Carpmaels & Ransford LLP

(57) **Abstract**

A method for soldering includes disposing a solder paste over pads formed on a substrate, and positioning a wire in the solder paste. A gas flows through a nozzle of a blower, toward a pipette, which is coupled to the nozzle, and is directed through a distal tip of the pipette toward a pad, among the pads, at a predefined temperature that melts the solder paste. The directed gas is confined by the pipette to impinge on the pad at an area smaller than 0.1 mm.

## Description

### CROSS-REFERENCE TO RELATED APPLICATION

This application claims the benefit of U.S. Provisional Patent Application 63/541,307, filed September 29, 2023.

### FIELD OF THE DISCLOSURE

The present disclosure relates generally to medical devices, and particularly to methods and systems for soldering wires of electrodes to pads in a multielectrode catheter.

### BACKGROUND OF THE DISCLOSURE

Some cardiac electrophysiological procedures require high-density mapping and/or tissue ablation using catheters having a large number of electrodes (e.g., about 100). For example, a basket catheter may have about ten splines, and about ten electrodes disposed on each spline. Each spline includes pads electrically connected to the electrodes, both formed on a substrate, such as a printed circuit board (PCB), and at least ten wires (e.g., one wire for each electrode) running between pads on the spline and connected to corresponding pads formed on a printed circuit board (PCB) of a connector at a proximal end of a shaft of the catheter. As such, the PCB of the spline as well as the shaft have a large number of pads which are soldered to a large number of wires, respectively.

The present disclosure will be more fully understood from the following detailed description of the examples thereof, taken together with the drawings in which:

### BRIEF DESCRIPTION OF THE DRAWINGS

Fig. 1 is a schematic, pictorial illustration of a system for soldering wires to pads in a multielectrode catheter, in accordance with an example of the present disclosure;
Fig. 2 is a flow chart that schematically illustrates a method for soldering wires to pads using the system of Fig. 1, in accordance with an example of the present disclosure; and
Fig. 3 is a flow chart that schematically illustrates a method for producing the system of Fig. 1, in accordance with an example of the present disclosure.

### DETAILED DESCRIPTION OF EXAMPLES

### OVERVIEW

Some catheters, such as basket catheters, may have about 100 electrodes mounted on a plurality of splines of the basket, which is coupled through a shaft of the catheter to a connector at the proximal end of the shaft. Both the PCB on the splines and the PCB of the connector have pads and a plurality of wires, e.g., a wire for each electrode, running through the shaft provides the electrical coupling. The wires extending from each spline may be arranged in braids or in any other configuration. The distal end of each wire is coupled to a predefined pad on the spline, and a proximal end of each wire is coupled to a corresponding pad in the connector, so as to exchange electrical signals between the electrodes and a control console, e.g., the PIU (patient interface unit) of the catheter, via the shaft. As such, The large number of pads and wires requires scaling down the pad size to tens of microns. The pad size may be in the order of magnitude of tens of micrometers, also referred to herein as microns) of each pad on the printed circuit board, resulting in a time-consuming and costly coupling process between the wires and the respective pads.

Examples of the present disclosure that are described below provide techniques for improving the manufacturing process of coupling wires of a multielectrode catheter to their respective pads, which are disposed on a substrate, in the present example, a flexible printed circuit board (PCB). In the context of the present disclosure and in the claims, the term PCB refers to the substrate having the pads, and in some cases described below, additional components disposed on the substrate. It is noted that in order to accommodate all the wires of the catheter within the PCB of the shaft, the size of each pad is reduced to tens of microns. In some examples, each of the wires is soldered to a respective pad of the shaft by: (i) disposing a solder paste over the surface of each pad, (ii) positioning each wire in the solder paste on each pad, and (iii) soldering the wire to the pad by heating the solder paste to a predefined temperature.

In some examples, a system for soldering the wires to the pads of the shaft comprises a blower assembly having a blower configured to generate a flow of gas, such as air or any other suitable gas (CO₂ or argon). It is noted that the flow of the air or another gas may be continuous (e.g., jetting) or pulsed. The blower assembly comprises a pipe having a first end coupled to the blower within the blower assembly, and a second end having a nozzle. The pipe is configured to flow the air toward the nozzle, and the air is heated to a predefined temperature for melting or softening the solder paste, as will be described in detail below. It is noted that due to the small size of the pads and the small distance between the pads (as will be described in detail below), it is important to direct the air to a predefined pad intended to undergo the soldering process without heating adjacent pads (e.g., the previously soldered pad located at the side the predefined pad intended to be soldered).

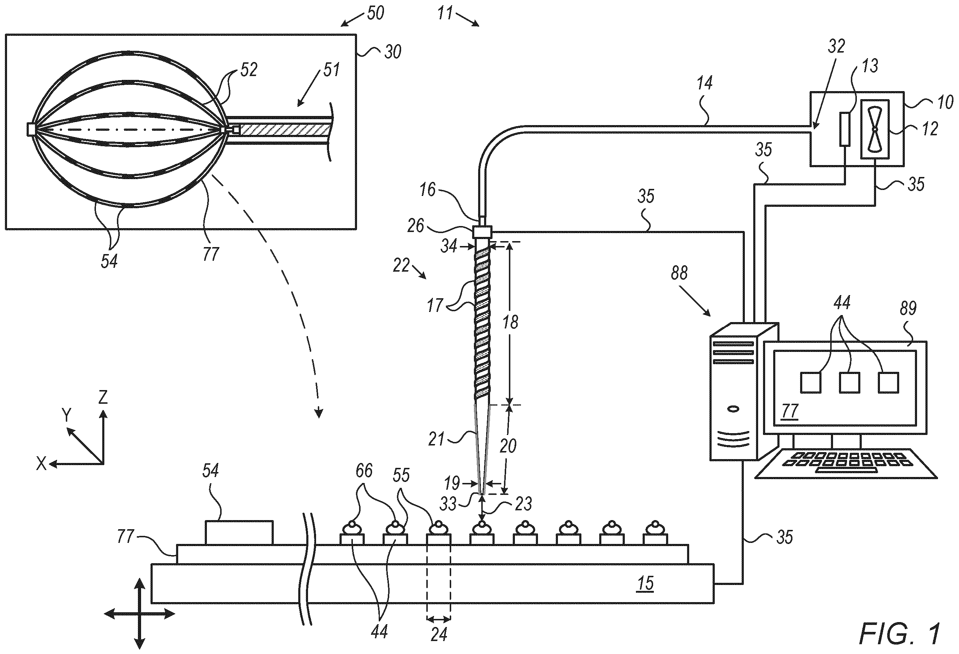

In some examples, the system comprises (i) a pipette configured to direct the air toward each pad individually in order to perform the soldering, and (ii) a coupler configured to couple between the pipette and the nozzle or outlet of the blower. In this configuration the proximal end of the pipette has a first diameter (e.g., of hundreds of microns or a few millimeters), and is coupled to the nozzle via the coupler. In another implementation, the nozzle and the coupler may comprise a single part, such that the proximal end of the pipette is coupled directly to the single part described above. The distal tip of the pipette has a second diameter (e.g., of tens of microns), which is typically smaller than the first diameter. The distal tip of the pipette is configured to direct the air toward an area of one to several tens of microns in order to solder a given wire to a given pad, without melting the solder paste disposed on pads adjacent to the given pad. Structural properties of the pipette are depicted in detail in Fig. 1 below.

In some examples, the air is heated by the blower and/or by a coil, which is wound around the outer surface of the pipette, so as to direct the air from the pipette toward the pad at the predefined temperature. In an example, the blower can be a hot air blower configured to blow the air at a suitable temperature, such as but not limited to temperatures between about 150⁰C and 200⁰C. In another example, the blower is configured to blow air at room temperature and the air is being heated as it flows through the pipette. The air can be heated through a pipette based on wounding the aforementioned coil around the pipette.

In some examples, the system comprises a positioning assembly configured to move the pipette and the PCB relative to one another in order to perform a separate soldering of each individual pad with a corresponding wire. The positioning assembly may comprise a motorized and controlled stage configured to move the PCB relative to the pipette along XYZ axes, and/or a controlled robotic arm configured to move the pipette relative to the PCB. In both configurations, the positioning assembly is configured to place the distal tip of the pipette opposite a pad intended to be soldered as described above.

In some examples, the system further comprises a controller, which is configured to control: (i) the blower to control a flow rate of the gas, and (ii) the temperature of the air within the pipette and out of the pipette (e.g., by controlling a heating element in the blower and/or the current supplied to the coil for heating the air), and (iii) the positioning assembly to position the distal tip of the pipette opposite the pad and the wire intended to be soldered.

Example implementations of the above components and techniques are further described in detail in Fig. 1 below.

The disclosed techniques enable fast and accurate soldering of wires to pads formed over the PCB of at least the shaft, and therefore, improve the quality of multielectrode catheters. Moreover, the disclosed techniques improve the efficiency and reduce the cost associated with the fabrication of such catheters.

### SYSTEM DESCRIPTION

Fig. 1 is a schematic, pictorial illustration of a soldering system 11, in accordance with an example of the present disclosure.

In some examples, system 11 includes a blower assembly 10 configured to blow air or any other suitable type of gas. Blower assembly 10 includes a blower 12 configured to generate a flow of the air, and a heating element 13, such as a coil (or any other suitable type of a heating element) configured to heat the air flowing toward an opening 32 of blower assembly 10. Blower assembly 10 optionally includes a pipe 14, which is coupled to opening 32 and is configured to flow the air generated by blower 12. Pipe 14 includes a nozzle 16, which is coupled to a coupler 26, whose functionalities are described below.

In some examples, system 11 includes a pipette 22, typically made from a glass, such as a tempered borosilicate glass, or from any other suitable material configured to withstand a broad range of temperatures, e.g., between about -150^{°}C to +500^{°}C. In the present example, coupler 26 is configured to mechanically couple nozzle 16 and a proximal end 18 of pipette 22, which has an inner diameter 34 that snugly fits into or over coupler 26 and nozzle 16, so as to enable the flow of the air generated by blower assembly 10 into pipette 22. It is noted that the coupling of pipette 22 may be carried out using a mechanical assembly, such as a rotational quick connector, by gluing the pipette to nozzle 16 or to coupler 26, or using any other suitable coupling technique.

In some examples, pipette 22 has a distal section 20 comprising a distal tip 33 having an inner diameter 19 (e.g., between about 30 pm and 60 pm) configured to direct the air toward a substrate, in the present example a printed circuit board (PCB) 77 whose structure and functionality are described below.

Reference is now made back to an inset 30 for describing PCB 77. In some example, a basket catheter 50 includes multiple splines 52 comprising stripes of flexible printed circuit boards having multiple electrodes 54 formed thereon (and/or coupled thereto). The stripes of the flexible printed circuit boards may be coupled to any suitable flexible splines (e.g., made from nickel-titanium alloys, also known as nitinol). In the present example, basket catheter 50 includes about ten splines 52, each spline 52 includes about ten electrodes 54 coupled to ten respective pads (not shown) formed on the respective spline 52 to connect between the electrode 54 and a wire, in the present example an electrical trace (not shown) running through the respective stripes 52.

In some examples, such procedures of EP mapping and tissue ablation are described, for example, in U.S. Patent Nos. 5,391,199; 5,443,489; 5,558,091; 6,172,499; 6,239,724; 6,332,089; 6,484,118; 6,618,612; 6,690,963; 6,788,967; 6,892,091, and in U.S. Patent Application Nos. 15/279,570, 16/896,104, 17/374,849, and 17/749,654.

Reference is now made back to the general view of Fig. 1 showing system 11 and a sectional view of PCB 77, pads 44, and wires 66 soldered to pads 44. In some examples, PCB 77 has at least 100 pads 44, and at least 100 wires 66 connected to 100 electrodes 54, respectively. Wires 66, which are configured to exchange the signals between PCB 77 and electrodes 54, are soldered to pads 44, respectively, using a molten solder paste 55. It is noted that in order to accommodate about 100 pads 44 on PCB 77, each pad 44 has a size 24 of several tens of microns along the X- and Y- axes of an XYZ coordinate system of system 11.

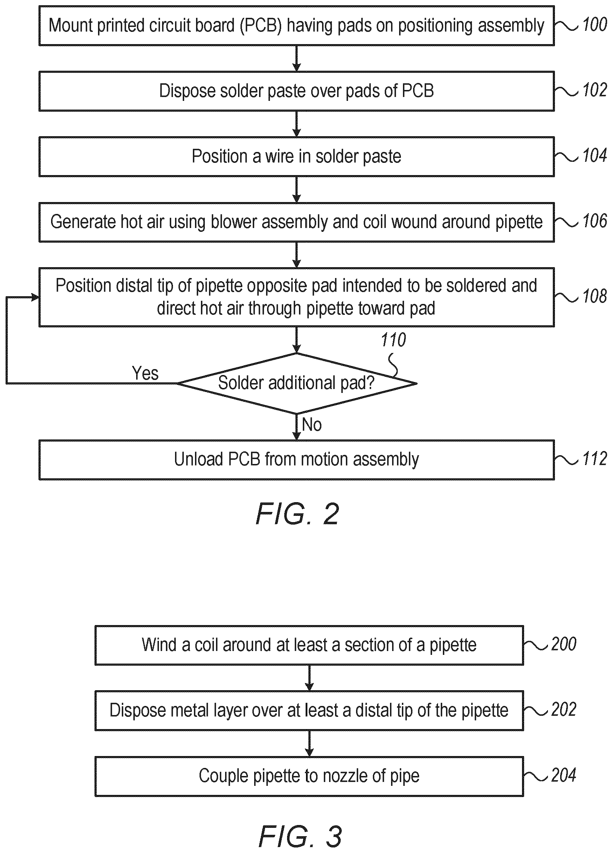

In some examples, in the soldering process sequence, which is described in detail in Fig. 2 below, (i) solder paste 55 is disposed on pads 44, (ii) wires 66 are placed in or over solder paste 55, and (iii) the stack of pad 44, solder paste 55, and wire 66 is soldered by directing the heated toward each pad 44 having the solder paste 55, and wire 66 disposed thereon. It is noted that due to the small size of pads 44, it is important to direct the hot air directly and separately to each pad 44 for an accurately controlled predefined time interval, otherwise the solder paste 55 may flow between adjacent pads resulting in electrical shorts and disqualification of PCB 77. As such, a manual soldering process may increase the duration and the cost associated with the soldering of wires 66 and pads 44.

In some examples, a coil 17 is wound around the outer surface of at least a proximal end 18 of pipette 22. Coil 17 is configured to heat the air directed to PCB 77, in order to heat solder paste to a predefined temperature (e.g., between about 90^{°}C and 400^{∘}C, depending on the thermal properties of solder paste 55).

In some examples, the air is heated by heating element 13 of blower assembly 10 and/or by coil 17, so as to direct the air from pipette 22 toward each individual pad 44 at the aforementioned predefined temperature. In the present example, because the size of inner diameter 19 is between about 30 µm and 60 pm, pipette 22 is configured to confine the directed air (which is heated to the predefined temperature) to impinge on pad 44 (and solder paste 55 wire 16 stacked thereon) at an area smaller than 0.1 mm. As described above, each pad 44 has size 24 of several tens of microns along the X- and Y- axes, so that the directed air is confined to heat only the solder paste 55 disposed on a predefined pad 44 (and thereby solder the wire 66 to the predefined pad 44), without melting solder paste 55 disposed on other pads 44 of PCB 77.

In some examples, the system 11 a positioning assembly 15 configured to move pipette 22 and PCB 77 relative to one another, in order to perform a separate soldering of each individual pad 44 with a corresponding wire 66, which are bonded to one another using solder paste 55. In the present example, positioning assembly 15 is implemented in a motorized and controlled stage configured to move PCB 77 relative to distal tip 33 of pipette 22, along XYZ axes. In the example of Fig. 1, the soldering is carried out when distal tip 33 is positioned opposite an individual stack of pad 44, solder paste 55, and wire 66 along the X- and Y-axes, and at a distance 23, e.g., between wire 66 and distal tip 33, along the Z-axis.

Additionally, or alternatively, the positioning assembly may be implemented in a controlled robotic arm (not shown), which is disposed between blower assembly 10 and pipe 14 (or at any other suitable position within system 11), and is configured to move pipette 22 relative to PCB 77. In both configurations, the positioning assembly is configured to place distal tip 33 of pipette 22 opposite a given pad 44, which is intended to be soldered as described above.

In some examples, system 11 further comprises a controller 88, which is implemented in a computer in the present example. Controller 88 is electrically coupled, via cables 35, to blower 12, heating element 13, coil 17, and positioning assembly 15, and is configured to control: (i) blower 12 to control the flow rate of the air (or any other suitable gas), (ii) heating element 13 (of blower assembly 10) and/or coil 17 (wound around pipette 22) to control the temperature of the air flowing through pipe 14, within pipette 22, and out of distal tip 33 toward PCB 77, and (iii) positioning assembly 15 to position distal tip 33 of pipette 33 opposite pad 44 and the wire 66 intended to be soldered, and at distance 23 between pipette 33 and wire 66.

In some examples, controller 88 is connected to a display 89 configured to display an image of PCB 77 and one or more pads 44 intended to be soldered (as described above), and information related to controlling blower assembly 10, heating elements 13 and 17, and positioning assembly 15. It is noted that some of the components in Fig. 1 are shown in different size for the sake of presentation. For example, in reality controller 88, display 89 and blower assembly 10 are substantially larger than PCB 77 and pipette 22, but this non-linear presentation is required in order to describe the features of the present disclosure.

In some examples, distance 23 may be between about 0.3 mm and about 3 mm (e.g., about 1 mm), which is measured using one or more cameras (not shown). In other examples, a metallic layer 21 (e.g., a gold layer) may be coated over the outer surface of at least distal tip 33, so as to control distance 23 by measuring the level of capacitances between distal tip 33 and wire 66 (or pad 44). In this example, layer 21 serves as an electrode, which is configured to measure capacitance between distal tip 33 of pipette 22 and pad 44 (or alternatively, between distal tip 33 and wire 66 disposed over pad 44 and solder paste 55).

In some examples, controller 88 may control the temperature of the air at distal tip 33 by operating one or both of heating element 13 and coil 17 via cables 35. It is noted that system 11 may comprise one or more temperature sensors (not shown) disposed at several positions along system 11, and more specifically, in close proximity to distal tip 33, in order to provide controller 88 with signals indicative of the temperature of the air.

This particular configuration of system 11 is shown by way of example, in order to illustrate certain problems that are addressed by examples of the present disclosure and to demonstrate the application of these examples in enhancing the performance of such a system. Examples of the present disclosure, however, are by no means limited to this specific configuration and sort of example system, and the principles described herein may similarly be applied to other sorts of soldering systems.

Fig. 2 is a flow chart that schematically illustrates a method for soldering wires 66 to pads 44 using system 11, in accordance with an example of the present disclosure.

The method begins at a printed circuit board mounting step 100, with mounting PCB 77 having pads 44 on positioning assembly 15, as described in more detail in Fig. 1 above.

At a solder paste disposing step 102, solder paste 55 is disposed on the surface of pads 44, as described in Fig. 1 above. In some examples, solder paste 55 may be disposed on the surface of pads 44 using any suitable technique, such as but not limited to dispensing, jetting, spreading, or depositing using any suitable type of dispensing, printing, and layer deposition systems.

At a wire positioning step 104, a wire 66 is positioned in the solder paste 55 disposed on each pad 44, as described in Fig. 1 above.

At a hot air generation step 106, controller 88 controls blower assembly 10, and optionally coil 17, to generate a flow of the hot air into pipette 22. In some examples, controller 88 is configured to control the heating of the air using at least one of heating element 13 of blower assembly 10 and coil 17 that is wound around proximal end 18 of pipette 22, as described in more detail in Fig. 1 above.

At a pipette positioning step 108, controller 88 controls positioning assembly 15 to position distal tip 33 of pipette 22: (i) opposite pad 24 along the X- and Y-axes, and (ii) at distance 23 (e.g., between about 0.3 mm and 3 mm) along the Z-axis from wire 66 intended to be soldered to pad 24. Subsequently, controller 88 controls the execution of the soldering process by directing the hot air toward the pad 44, solder paste 55 and wire 66, which are intended to be soldered, as described in detail in Fig. 1 above.

In some examples, the hot air directed toward the pad 44 may be continuous jetting of the hot air, or pulses of the hot air that are directed to pad 44 in order to perform the soldering process.

It is noted that the sequence of steps 104, 106 and 108 is provided by way of example, and these operations may be carried out using any other suitable order. In an example, the order of steps 106 and 108 may be reversed, such that after positioning distal tip 33, controller 88 controls blower assembly 10 and coil 17 to generate the hot air, which is immediately directed from pipette 22 toward the pad 44, solder paste 55 and wire 66 intended to be soldered. In another example, system 11 may include a valve (not shown) disposed at one or more of: (i) opening 32, (ii) nozzle 16 and/or coupler 26 (e.g., the valve may be in lieu of coupler 26), and (iii) at any suitable position along pipette 22. In this example, the hot air may be generated concurrently with any of the steps of the method, using the techniques described above while controller 88 controls the valve to be at a closed position. Sunsequently, controller 88 controls the valve to be at an opened position (and thereby allowing the flow of the hot air through distal tip 33) only when distal tip 33 of pipette 22 is positioned in front of the stack of pad 44, solder paste 55, and wire 66, and at a distance 23 from wire 66, as described above in Fig. 1 and in step 108.

At a decision step 110, controller 88 checks whether soldering of an additional wire 66 to a respective pad 44 is required. In case an additional soldering is required, the method loops back to step 108. Alternatively, the method proceeds to a PCB unloading step 112 that concludes the method with controller 88 controls (i) positioning assembly 15 to unload PCB 77, or (ii) a robotic arm (not shown) to unload PCB 77 from positioning assembly 15.

Fig. 3 is a flow chart that schematically illustrates a method for producing system 11, in accordance with an example of the present disclosure.

The method begins at a coil winding step 200 with winding coil 17 around at least a section of pipette 22, in the present example, coil 17 is winded around proximal end 18 of pipette 22, as shown and depicted in Fig. 1 above. Moreover, coil 17 is coupled to cable 35, which is configured to supply electrical current to coil 17 in order to heat the air.

At a metal coating step 202, layer 21 (made from gold or from any other suitable material) is disposed at least on distal tip 33 (and in some cases also on an additional portion of section 20), as depicted in detail in Fig. 1 above.

In alternative examples, steps 200 and 202 may be carried out in a reversed order, or (less likely) even concurrently.

At a coupling step 204 that concludes the method, pipette 22 is being coupled to nozzle 16 using coupler 26 or any other suitable technique, as described in more detail in Fig. 1 above.

In alternative examples, steps 204 and 206 may be carried out in a reversed order. Moreover, in case system 11 includes the valve described in Fig. 2 above, the method may include a valve integration step in which the valve is being coupled with one or more components (described in Fig. 2 above) of system 11.

It is noted that one or more of the steps described above may be omitted from the production method in case any other the parts may already be pre-assembled (e.g., by a subcontractor).

Although the examples described above mainly address precise soldering of wires to pads of a printed circuit board on a catheter shaft, the methods and systems described herein can also be used in other applications, such as in soldering wires to the splines of a multielectrode catheter or in any other fabricating process of catheters or other parts of a medical system that require a deep sub-millimeter precision level.

### Example 1

A system (11) includes: (a) a blower (10) configured to generate a flow of a gas toward a substrate (77) including pads (44) on which solder paste (55) is disposed, the blower (10) includes a nozzle (16) configured to blow the gas out of the blower (10), (b) a pipette (22), which is coupled to the nozzle (16), and is configured to: (i) receive the gas from the nozzle (16) at a proximal end of the pipette (22), (ii) flow the gas through the pipette (22), and (iii) direct the gas through a distal tip (33) of the pipette (22) toward a pad (44) among the pads (44) at a predefined temperature that melts the solder paste (55), wherein the pipette (22) is configured to confine the directed gas at the predefined temperature to impinge on the pad (44) at an area smaller than 0.1 mm, and (c) a coupler (26) disposed between the nozzle (16) and the pipette (22) and configured to couple between the nozzle (16) and the pipette (22).

### Example 2

The system of Example 1, further includes a coil (17), which is wound around an outer surface of the pipette, and is configured to heat the gas directed to the pad to the predefined temperature.

### Example 3

The system of Example 1, further includes an electrode (21), which is coupled to an outer surface of the pipette, and is configured for measuring capacitance between the distal tip of the pipette and the pad.

### Example 4

The system of Example 3, wherein the measured capacitance is indicative of a distance between the distal tip of the pipette and the pad.

### Example 5

The system of Example 3, wherein the electrode includes a metal layer coated on the outer surface of the pipette.

### Example 6

The system of Example 1, wherein the proximal end of the pipette has a first diameter, and the distal tip of the pipette has a second diameter, smaller than the first diameter and smaller than ten micrometers.

### Example 7

The system of Example 1, further including a controller, which is configured to control: (i) the blower to control a flow rate of the gas, and (ii) a temperature of the gas flowing (i) within the pipette, and (ii) at the distal tip of the pipette.

### Example 8

The system of Example 7, further including a positioning assembly (15) configured to move the pipette and the PCB relative to one another, and wherein the controller is configured to control the positioning assembly to position the distal tip of the pipette: (i) opposite the pad along at least a first axis, and (ii) at a predefined distance from the pad along a second axis.

### Example 9

The system of Example 1, further includes a pipe (14), which is positioned between the nozzle and the coupler, and is configured to connect between the blower and the pipette.

### Example 10

The system of Example 1, wherein the pipette includes borosilicate glass that is tempered.

### Example 11

The system of Example 1, wherein the gas is heated at least to the predefined temperature before entering the pipette.

### Example 12

A method, including:
coupling a coupler (26) to a nozzle (16) located at an end of a blower (10) for flowing a gas; and coupling to the nozzle (16), a pipette (22) made from glass for directing the gas toward a substrate (77), wherein a proximal end of the pipette (22) is coupled to the coupler (26) and has a first diameter (34), and a distal tip (33) of the pipette (22) has a second diameter (19), smaller than the first diameter (34).

### Example 13

The method of Example 12, wherein coupling the pipette includes coupling the pipette made from borosilicate glass that is tempered.

### Example 14

The method of Example 13, wherein the substrate includes at least a pad (44) having solder paste (55) and a wire (66) disposed thereon, and including winding a coil (17) around an outer surface of the pipette.

### Example 15

The method of Example 14, further including heating the gas directed to the pad, to a predefined temperature, by applying at least one of: (i) the coil wound around the outer surface of the pipette, and (ii) a heating element for heating the gas that flows by the blower.

### Example 16

The method of Example 14, further including coupling an electrode to an outer surface of the pipette for measuring capacitance between the distal tip of the pipette and the pad, wherein the measured capacity is indicative of a distance between the distal tip of the pipette and the pad.

### Example 17

The method of Example 16, wherein coupling the electrode includes coating at least the distal tip of the pipette with an electrically conductive layer.

### Example 18

The method of Example 14, further including connecting a controller for controlling: (i) a flow rate of the gas, and (ii) a temperature of the gas within the pipette and out of the pipette.

### Example 19

The method of Example 18, further including connecting the controller to a positioning assembly for moving the pipette and the substrate relative to one another, and for positioning the distal tip of the pipette: (i) opposite the pad along at least a first axis, and (ii) at a predefined distance from the pad along a second axis.

### Example 20

A method for soldering, the method including:
disposing a solder paste (55) over pads (44) formed on a substrate (77), and positioning a wire (66) in the solder paste (55); flowing a gas, through a nozzle (16) of a blower (10), toward a pipette (22), which is coupled to the nozzle (16); and directing the gas through a distal tip (33) of the pipette (22) toward a pad (44), among the pads (44), at a predefined temperature that melts the solder paste (55), wherein the directed gas is confined by the pipette (22) to impinge on the pad (44) at an area smaller than 0.1 mm.

It will be appreciated that the examples described above are cited by way of example, and that the present disclosure is not limited to what has been particularly shown and described hereinabove. Rather, the scope of the present disclosure includes both combinations and subcombinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A system (11), comprising:
a blower (10) configured to generate a flow of a gas toward a substrate (77) including pads (44) on which solder paste (55) is disposed, the blower (10) comprising a nozzle (16) configured to blow the gas out of the blower (10);
a pipette (22), which is coupled to the nozzle (16), and is configured to:
receive the gas from the nozzle (16) at a proximal end of the pipette (22);
flow the gas through the pipette (22); and
direct the gas through a distal tip (33) of the pipette (22) toward a pad (44) among the pads (44) at a predefined temperature that melts the solder paste (55), wherein the pipette (22) is configured to confine the directed gas at the predefined temperature to impinge on the pad (44) at an area smaller than 0.1 mm; and
a coupler (26) disposed between the nozzle (16) and the pipette (22) and configured to couple between the nozzle (16) and the pipette (22).

2. The system according to claim 1, and comprising a coil (17), which is wound around an outer surface of the pipette, and is configured to heat the gas directed to the pad to the predefined temperature.

3. The system according to claim 1, and comprising an electrode (21), which is coupled to an outer surface of the pipette, and is configured for measuring capacitance between the distal tip of the pipette and the pad.

4. The system according to claim 3, wherein the measured capacitance is indicative of a distance between the distal tip of the pipette and the pad, or the electrode comprises a metal layer coated on the outer surface of at least the distal tip of the pipette.

5. The system according to claim 1, wherein the proximal end of the pipette has a first diameter, and the distal tip of the pipette has a second diameter, smaller than the first diameter, and smaller than ten micrometers.

6. The system according to claim 1, and comprising a controller, which is configured to control: (i) the blower to control a flow rate of the gas, and (ii) a temperature of the gas flowing (i) within the pipette, and (ii) at the distal tip of the pipette, and optionally comprising a positioning assembly (15) configured to move the pipette and the substrate relative to one another, and wherein the controller is configured to control the positioning assembly to position the distal tip of the pipette: (i) opposite the pad along at least a first axis, and (ii) at a predefined distance from the pad along a second axis.

7. The system according to claim 1, and comprising a pipe (14), which is positioned between the nozzle and the coupler, and is configured to connect between the blower and the pipette.

8. The system according to claim 1, wherein the pipette comprises borosilicate glass that is tempered, or the gas is heated at least to the predefined temperature before entering the pipette.

9. A method, comprising:
coupling a coupler (26) to a nozzle (16) located at an end of a blower (10) for flowing a gas; and
coupling to the nozzle (16), a pipette (22) made from glass for directing the gas toward a substrate (77), wherein a proximal end of the pipette (22) is coupled to the coupler (26) and has a first diameter (34), and a distal tip (33) of the pipette (22) has a second diameter (19), smaller than the first diameter (34).

10. The method according to claim 9, wherein coupling the pipette comprises coupling the pipette made from borosilicate glass that is tempered.

11. The method according to claim 10, wherein the substrate comprises at least a pad (44) having solder paste (55) and a wire (66) disposed thereon, and comprising winding a coil (17) around an outer surface of the pipette.

12. The method according to claim 11, and comprising heating the gas directed to the pad, to a predefined temperature, by applying at least one of: (i) the coil wound around the outer surface of the pipette, and (ii) a heating element for heating the gas that flows by the blower.

13. The method according to claim 11, and comprising coupling an electrode to an outer surface of the pipette, for measuring capacitance between the distal tip of the pipette and the pad, wherein the measured capacity is indicative of a distance between the distal tip of the pipette and the pad, and optionally wherein coupling the electrode comprises coating at least the distal tip of the pipette with an electrically conductive layer.

14. The method according to claim 12, and comprising connecting a controller for controlling: (i) a flow rate of the gas, and (ii) a temperature of the gas within the pipette and out of the pipette, and optionally comprising connecting the controller to a positioning assembly for moving the pipette and the substrate relative to one another, and for positioning the distal tip of the pipette: (i) opposite the pad along at least a first axis, and (ii) at a predefined distance from the pad along a second axis.

15. A method for soldering, the method comprising:
disposing a solder paste (55) over pads (44) formed on a substrate (77), and positioning a wire (66) in the solder paste (55);
flowing a gas, through a nozzle (16) of a blower (10), toward a pipette (22), which is coupled to the nozzle (16); and
directing the gas through a distal tip (33) of the pipette (22) toward a pad (44), among the pads (44), at a predefined temperature that melts the solder paste (55), wherein the directed gas is confined by the pipette (22) to impinge on the pad (44) at an area smaller than 0.1 mm.
